# EUROPÄISCHE PATENTSCHRIFT

(11) **EP 2 459 368 B1**
(45) Veröffentlichungstag und Bekanntmachung des Hinweises auf die Patenterteilung: **22.11.2017**
(21) Anmeldenummer: 10726078.8
(22) Anmeldetag: 21.06.2010
(51) Int. Cl.: B32B 1/08

(54) **SCHLAUCH MIT MEDIENBESTÄNDIGER INNENSCHICHT, SEINE VERWENDUNG UND VERFAHREN ZU DESSEN HERSTELLUNG**
HOSE HAVING MEDIA-RESISTANT INNER LAYER, APPLICATION AND METHOD FOR PRODUCTION THEREOF
TUYAU FLEXIBLE COMPORTANT UNE COUCHE INTÉRIEURE RÉSISTANT AUX FLUIDES, SON UTILISATION, ET PROCÉDÉ POUR SA FABRICATION

(30) Priorität: 27.07.2009 DE 102009026254
(43) Veröffentlichungstag der Anmeldung: 06.06.2012
(73) Patentinhaber: ContiTech MGW GmbH, 34346 Hannoversch-Münden (DE)
(72) Erfinder: LUDWIG, Ligia, 34119 Kassel (DE); SONT, Michael, 21640 Horneburg (DE); SEEBOLD, Uwe, 37217 Witzenhausen (DE)
(74) Vertreter: Finger, Karsten
(86) Internationale Anmeldenummer: PCT/EP2010/058686
(87) Internationale Veröffentlichungsnummer: WO 2011/012374

(56) Entgegenhaltungen:
- EP-A2- 1 496 298

## Beschreibung

Die Erfindung betrifft einen Schlauch mit wenigstens folgendem Schichtenaufbau:
- einer Innenschicht aus einer aminisch vernetzten Kautschukmischung mit medienbeständigen Eigenschaften und
- einer Haftschicht aus einer peroxidisch vernetzten Kautschukmischung, die auf der Außenseite der Innenschicht aufliegt, wobei die Innenschicht und die Haftschicht einen Haftverbund bilden.

Der Entwicklung der Innenschicht mit medienbeständigen Eigenschaften, beispielsweise gegenüber Ölen, Kraftstoffen, Chemikalien, Kältemitteln und Gasen, wurde in der Vergangenheit ein breiter Raum gewidmet, wobei die diesbezügliche Entwicklung im Hintergrund zunehmender Anforderungen, unter anderem im Hinblick von zusätzlichen Sperrschichten, insbesondere bei Gasen, noch nicht abgeschlossen ist.
EP 1 496 298 A2 offenbart beispielsweise einen Kältemittelschlauch für die Anwendung im Automobilbereich und Klimaanlagenbereich. Ein derartiger Schlauch muss eine hohe Flexibilität und eine gute Gasdichtigkeit aufweisen. Der in EP 1 496 298 A2 offenbarte Schlauch ist ein mehrlagiger Kühlmittelschlauch, der aus einer Innenschicht, einer Friktionsschicht, einer Festigkeitsträgerschicht und einer Außenschicht besteht. Die Kernschicht enthält hierbei einen Blend aus zwei verschiedenen Polyamiden, insbesondere Nylon 6 und Nylon 6.66.
Hinsichtlich des diesbezüglichen weiteren Standes der Technik wird beispielsweise auf folgende Literatur verwiesen:
DE 88 05 593 U1
DE 20 2004 020 354 U1
DE 42 15 778 A1
DE 10 2008 014 988 A1
EP 0 582 301 A1
EP 0 826 915 A2
EP 1 764 211 A1
EP 1 546 595 B1
WO 2007/045322 A1
US 4 998 564
US 5 718 957
US 2005/0205149 A1

Im Folgenden wird auf den Stand der Technik bei Ladeluftschläuchen näher eingegangen, wobei hier insbesondere auf die Offenlegungsschrift WO 2007/045322 A1 verwiesen wird.

Kfz-Verbrennungsmotoren werden je nach ihrer Bauart unterschieden in Saugmotoren, bei denen Schläuche die Luft ohne Überdruck zur Ansaugbrücke führen, und in aufgeladene Motoren mit dynamischer oder Fremdaufladung. Bei Motoren mit Fremdaufladung wird die Luft nach dem Lader, wie beispielsweise bei einem Abgasturbolader, durch Rohre und Schläuche unter Druck und Temperatur den Zylindern zugeführt. Die Vorteile der Aufladung des Motors, wie beispielsweise Erhöhung von Motorleistung und Motordrehmoment, Verringerung des Kraftstoffverbrauches und Reduzierung der Schadstoffemissionen, können durch Kühlung der Ladeluft durch einen Ladeluftkühler zwischen Abgasturbolader und Zylinder noch verstärkt werden. Während Abgasturbolader motorfest montiert sind, werden Ladeluftkühler bisher an der Karosserie befestigt. Bei Motoren mit Ladeluftkühlung müssen die Ladeluftschläuche also die Relativbewegungen zwischen Motor und Karosserie ausgleichen.

Schläuche zur Zuführung von Luft zu Kfz-Motoren werden unterteilt nach Art des zu führenden Mediums in Reinluftschläuche oder Schläuche zur Führung von Luft, die verunreinigt ist durch Motoröl, Kraftstoffdämpfe, Kraftstoffkondensate und Abgase aus der Kurbelgehäuseentlüftung, der Abgasrückführung und der Schmierung des Abgasturboladers. Ladeluftleitungen und Ladeluftschläuche müssen chemisch beständig sein gegen Motoröl und Luft unter Druck und Temperatur, die abhängig sind vom Ladedruck und der Ladeluftkühlung. Der Ausgleich von Montage-Toleranzen, die Aufnahme von Relativbewegungen zwischen Abgasturbolader/Ladeluftkühler und Ladeluftkühler/Motor und die akustische Dämpfung können nur erfüllt werden durch dynamisch beständige Ladeluftschläuche.

Ladeluftschläuche werden nach dem Stand der Technik aus einer vernetzten Kautschukmischung auf der Basis von AEM (Handelsname "VAMAC") hergestellt, und zwar sowohl für die Innenschicht als auch für die Außenschicht. Sie zeichnen sich durch ein gutes Setzungsverhalten bei gleichzeitig hoher dynamischer Tauglichkeit aus, allerdings nur bei einer aminischen Vernetzung.

Ladeluftschläuche aus AEM mit peroxidischer Vernetzung erfüllen nicht die Anforderungen bezüglich des Setzungsverhaltens und der dynamischen Tauglichkeit.

Ladeluftschläuche, bei denen sowohl die Innenschicht als auch die Außenschicht aus einer aminisch vernetzten AEM-Kautschukmischung bestehen, zeichnen sich wiederum durch folgende Nachteile aus:
- Es entstehen hohe Materialkosten für die AEM-Mischung oder die AEM-Mischungen, falls Innenschicht und Außenschicht unterschiedlich aufgebaut sind.
- Es tritt eine geringe Flexibilität bei Temperaturen unter -35 °C auf.
- Für ein gutes Setzungsverhalten müssen die Schläuche in Heißluft nachvulkanisiert werden.
- Die starke Temperaturabhängigkeit der Viskosität einer AEM-Mischung erschwert das Einhalten enger Wandstärkentoleranzen bei der Extrusion der Außenschicht im Querspritzkopf.

Die hier anhand von Ladeluftschläuchen aufgezeigten Probleme beziehen sich grundsätzlich auf alle Schläuche auf der Werkstoffbasis aminisch vernetztes AEM.

In der Patentschrift EP 1 546 595 B1 wird nun ein Schlauch, insbesondere ein Ladeluftschlauch, vorgestellt, der die oben genannten Nachteile beseitigen soll. Dabei besteht dessen Innenschicht aus einer aminisch und/oder peroxidisch vernetzten Kautschukmischung auf der Basis von AEM, ACM oder EVA. Zwischen der Innenschicht und der Außenschicht ist eine Haftschicht (Zwischenschicht) angeordnet, die aus einer peroxidisch vernetzten Materialmischung besteht. Diese Materialmischung basiert dabei auf einer Kautschukverschnittmischung, insbesondere auf der Basis eines AEM/EPDM-Verschnittes. Hiermit ist jedoch folgender Konflikt verbunden, der bereits angerissen wurde:
- Bei AEM ist die aminische Vernetzung von Vorteil, da hiermit ein gutes Setzungsverhalten bei gleichzeitig hoher dynamischer Tauglichkeit verbunden ist. Allerdings tritt dann das Problem der Unverträglichkeit von AEM und EPDM auf. Dieses Problem der Unverträglichkeit wird durch die peroxidische Vernetzung gelöst.
- AEM-Schläuche mit peroxidischer Vernetzung erfüllen wiederum - wie bereits erwähnt - nicht die Anforderungen bezüglich des Setzungsverhaltens und der dynamischen Tauglichkeit.

Im Hintergrund der hier geschilderten Gesamtproblematik und des in der Patentschrift EP 1 546 595 B1 offenbarten Zielkonfliktes besteht die Aufgabe der Erfindung darin, einen gattungsgemäßen Schlauch bereitzustellen, der sich einerseits durch eine medienbeständige Innenschicht und andererseits durch eine mit der Innenschicht haftend verbundene Haftschicht auszeichnet, wobei diese beiden Grundschichten die Basis für einen vielfältigen Schlauchaufbau bilden, und zwar unter dem Aspekt vieler Anwendungsmöglichkeiten.

Gelöst wird diese Aufgabe dadurch, dass
- die Innenschicht aus einer Kautschukmischung auf der Basis von verschnittfreiem AEM oder eines AEM-Verschnittes oder von verschnittfreiem ACM oder eines ACM-Verschnittes besteht und
- die Haftschicht aus einer Kautschukmischung auf der Basis von EPM oder EPDM besteht, die jeweils unverschnitten sind.

Von besonderer Bedeutung ist eine Innenschicht auf der Werkstoffbasis AEM oder eines AEM-Verschnittes, und zwar unter dem Aspekt der Verträglichkeit mit einer anderen Kautschukkomponente. Zumeist genügt ohnehin die verschnittfreie Werkstoffvariante.

Im Rahmen einer einfachen Schlauchausführung kann die Haftschicht ohne weitere darauf aufbauende Schichten zugleich die Außenschicht bilden, zumal EPM und EPDM sich durch eine hohe Alterungs-, Witterungs- und Hitzebeständigkeit bei guter Kälteflexibilität auszeichnen. Diese Werkstofftypen schützen den Schlauch vor äußeren Einflüssen. Ein derartiger Schlauch wird jedoch nur dann eingesetzt, wenn das zu führende Medium nicht unter Überdruck steht.

Zumeist wird jedoch der Schlauch mit einer Außenschicht versehen, insbesondere in Verbindung mit einer eingebetteten Festigkeitsträgerschicht, die ein- oder mehrlagig ausgebildet sein kann. Auf diese Weise kann das zu transportierende Medium unter Druck stehen. Bei einem derartigen Schlauchaufbau liegt die Haftschicht als Zwischenschicht vor, und zwar zwischen der Innenschicht und der Festigkeitsträgerschicht bzw. der Außenschicht.

Die Außenschicht besteht dabei aus einer peroxidisch vernetzten Kautschukmischung, insbesondere auf der Basis von verschnittfreiem EPM oder eines EPM-Verschnittes oder von verschnittfreiem EPDM oder eines EPDM-Verschnittes. Bei der Verschnittvariante spielt insbesondere ein EPM/EPDM-Verschnitt mit unterschiedlichen Anteilen eine Rolle, beispielsweise ein EPM/EPDM-Verschnitt mit 30 phr EPM und 70 phr EPDM. Zumeist wird jedoch die verschnittfreie Werkstoffversion bevorzugt. Die besonderen Vorzüge von EPM und EPDM im Hinblick auf äußere Einflüsse wurden bereits oben erwähnt.

Die Festigkeitsträgerschicht ist aus einem Gewebe, Gewirke oder Gestrick gebildet, insbesondere auf der Basis eines textilen Werkstoffes. Die diesbezüglichen Werkstoffe können ein Polyamid (PA), Polyimid (PI), ein Aramid, insbesondere para-Aramid oder meta-Aramid, ein Polyvinylacetal (PVA), ein Polyetheretherketon (PEEK), ein Polyester, insbesondere Polyethylentherephthalat (PET) oder Polyethylen-2,6-naphthalat (PEN), ein Polysulfon (PSU), ein Polyphenylen oder Polyphenylenderivat, insbesondere ein Polyphenylensulfid (PPS), sein. Auch Hybridkonzepte, beispielsweise in Form eines Mischzwirns, können zum Einsatz gelangen. Im Rahmen einer neueren Schlauchentwicklung (DE 10 2008 037 417.2) kommt beispielsweise ein Hybridkonzept aus PPS und PA zur Anwendung. Das PPS als Hochleistungswerkstoff trägt zu einer hohen Festigkeit bei, während das PA neben dem Festigkeitsträgerbeitrag auch über seine Haftaktivierbarkeit zu einer verbesserten Haftung gegenüber dem umgebenden elastomeren Werkstoff beiträgt. Die Festigkeitsträgerschicht steht in diesem Zusammenhang zumeist in einem direkten Kontakt zur Haftschicht (Zwischenschicht) einerseits und zur Außenschicht andererseits, und zwar unter Ausbildung eines Haftverbundes.

Da die Vernetzung der Innenschicht, Haftschicht bzw. Zwischenschicht und Außenschicht, insbesondere unter Einbezug eines Vernetzersystems, umfassend ein Vernetzungsmittel und einen Beschleuniger oder Aktivator von wesentlicher Bedeutung ist, wird im Folgenden näher auf die Vernetzung der einzelnen Schichten eingegangen.
- Innenschicht
   Die Innenschicht ist aminisch vernetzt, vorzugsweise unter dem Aspekt der ausschließlichen aminischen Vernetzung. In der Patentschrift EP 1 546 595 B1 wird der Einsatz eines aminischen und/oder peroxidischen Vernetzungsmittels beschrieben, wobei eingangs bereits über die Nachteile der peroxidischen Vernetzung von Kautschukmischungen auf AEM-Basis eingegangen wurde. Selbst ein geringer Anteil an Peroxiden neben dem aminischen Vernetzungsmittel ist nicht von Vorteil.
   Das aminische Vernetzungsmittel ist insbesondere ein Diamin, wobei insbesondere HMD und/oder HMDC eingesetzt werden. Der Anteil des aminischen Vernetzungsmittel beträgt 0,3 phr bis 2,1 phr, insbesondere 0,8 phr bis 1,6 phr, insbesondere wiederum 1,0 phr bis 1,4 phr.
   Der Beschleuniger oder Aktivator ist eine Base, beispielsweise DPG, insbesondere aber DBU oder ein DBU-Derivat. Diesbezüglich wird auf die neuere Entwicklung gemäß DE 10 2008 055 525.8 verwiesen. Das DBU ersetzt das als giftig und krebserregend eingestufte DOTG, das bislang häufig als Beschleuniger eingesetzt wurde. Das DBU entfaltet insbesondere in Verbindung mit HMD und/oder HMDC, insbesondere wiederum mit HMDC, eine optimale Wirkung in der Vulkanisationsgeschwindigkeit und in der Lagerstabilität einer AEM- oder ACM-Kautschukmischung. Der Mengenanteil an dem Beschleuniger beträgt 0,5 phr bis 2,4 phr, insbesondere 0,8 phr bis 2,0 phr, insbesondere wiederum 1,0 phr bis 1,8 phr.
- Haftschicht bzw. Zwischenschicht
   Das peroxidische Vernetzungsmittel für die Kautschukmischung der Haftschicht bzw.
   Zwischenschicht ist vorzugsweise ein Alkyl-Aralkyl-Peroxid und/oder ein Diaralkyl-Peroxid und/oder ein Peroxyketal und/oder ein Peroxyester. Von besonderer Bedeutung ist der Einsatz von Dicumylperoxid und/oder Bis(tert-butylperoxyisopropyl)-benzol und/oder 2,5-Bis(tert-butylperoxy)-2,5-dimethylhexan. Der Anteil des peroxidischen Vernetzungsmittels beträgt 3,0 phr bis 10,0 phr, insbesondere 4,5 phr bis 8,5 phr, insbesondere wiederum 5,5 phr bis 7,5 phr.
   Der Aktivator ist insbesondere eine Allylverbindung und/oder ein Acrylat und/oder ein Diacrylat und/oder ein Methycrylat und/oder BR, hier insbesondere in Form von 1,2-BR, und/oder N,N'-m-phenylen-dimaleimid. Aus der Gruppe der Allylverbindungen sind insbesondere TAC sowie Abkömmlinge hiervon zu nennen. Bei der Gesamtgruppe der Acrylate, Diacrylate und Methacrylate spielen sowohl die Ester, beispielsweise MMA, als auch die Salzverbindungen, insbesondere in Form von Zinksalzverbindungen, eine Rolle. Von besonderer Bedeutung ist ZDMA. Der Mengenanteil an dem Aktivator beträgt 0,1 phr bis 20,0 phr, insbesondere 1,0 phr bis 15,0 phr, insbesondere wiederum 5,0 phr bis 15,0 phr.
- Außenschicht
   In Verbindung mit dem bevorzugten Schlauchaufbau aus Innenschicht, Haftschicht (Zwischenschicht) und Außenschicht gilt für die peroxidisch vernetzte Kautschukmischung das gleiche wie für die oben diskutierte Haftschicht bzw. Zwischenschicht, und zwar sowohl für die bevorzugten Substanzarten des Vernetzungsmittels und Aktivators als auch für deren Mengenanteile.

Die Kautschukmischung der Innenschicht und der Haftschicht bzw. Zwischenschicht und der Außenschicht enthält neben dem Vernetzungsmittel oder Vernetzersystem weitere Mischungsingredienzien. Diese umfassen insbesondere einen Füllstoff und/oder ein Metalloxid und/oder einen Weichmacher und/oder ein Verarbeitungshilfsmittel und/oder ein Alterungsschutzmittel und/oder ein Haftmittel. Zumeist ist jedoch wenigstens ein Füllstoff eingemischt.

Der Füllstoff ist ein Ruß, beispielsweise ein SAF-Ruß, HAF-Ruß, FF-Ruß, FEF-Ruß oder Flammruß, und/oder eine Kieselsäure und/oder ein Silikat und/oder Kreide und/oder Kaolin. Bei den Silikaten sind insbesondere ein Aluminium- und/oder Calcium- und/oder ein Magnesiumsilikat zu nennen. Zumeist ist jedoch wenigstens ein Ruß eingemischt.

Bei den Metalloxiden spielen CaO und/oder MgO und/oder ZnO eine besondere Rolle.

Der Weichmacher ist ein Mineralölweichmacher und/oder ein Polymerweichmacher und/oder ein Esterweichmacher.

Das Haftmittel umfasst einen Klebrigmacher und/oder einen Haftvermittler, beispielsweise ein Harz. Damit ist es möglich, dass die Innenschicht und die Haftschicht bzw. die Zwischenschicht frei von einem zusätzlichen Haftvermittlerauftrag einen Haftverbund bilden. Nach einer Alternative kann zwischen diesen beiden Schichten zusätzlich eine Haftmittellösung oder ein Lösungsmittel aufgetragen werden.

Der Gesamtmengenanteil der Mischungsingredienzien, und zwar ohne das Vernetzungsmittel bzw. das Vernetzersystem, beträgt 50 phr bis 400 phr, insbesondere 80 phr bis 160 phr.

Ansonsten wird hinsichtlich der Mischungsingredienzien auf den allgemeinen Stand der Kautschukmischungstechnologie verwiesen.

Hinsichtlich der hier verwendeten Kurzbezeichnungen gilt:

| | | |
|---|---|---|
| AEM | Ethylen-Acrylat-Kautschuk | |
| ACM | Acrylat-Kautschuk | |
| EPM | Ethylen-Propylen-Kautschuk | |
| EPDM | Ethylen-Propylen-Dien-Kautschuk | |
| EVA | Ethylen-Vinylacetat-Kautschuk | |
| BR | Butadienkautschuk | |
| HMD | Hexamethylendiamin | |
| HMDC | Hexamethylendiamincarbamat | |
| DBU | 1,8-Diazabicyclo [5.4.0] undec-7-en | |
| DOTG | Di-ortho-tolylguanidin | |
| DPG | Diphenylguanidin | |
| TAC | Triallylcyanurat | |
| MMA | Methylmethacrylat | |
| ZDMA | Zink-Dimethacrylat | |
| SAF | super abrasion | ) Kurzbezeichnungen für Ruß-Typen |
| HAF | high abrasion | ) Römpps Chemie-Lexikon, Band 5, 1987 |
| FF | fine | ) ebenso |
| FEF | fast extrusion | ) ebenso |
| GBF | general purpose | ) ebenso |
| phr | per hundred rubber | |

Hinsichtlich des Transportes eines Mediums findet der erfindungsgemäße Schlauch folgende Anwendung:
- Der Schlauch wird zum Transport einer Flüssigkeit eingesetzt, insbesondere eines Öls oder Kraftstoffes. Die Öle sind insbesondere wiederum Motoröle, Getriebeöle, Hydrauliköle oder Servolenkungsöle.
- Der Schlauch wird zum Transport eines Gases mit oder ohne Zusatz eingesetzt. Zu nennen sind hier der Transport von Reinluft sowie von mit Motoröl, Kraftstoffdämpfen, Kraft-Kondensat, Abgas oder Blow-by-Gasen verunreinigter Luft. Auch der Transport von Luft unter statischem oder zyklischem Überdruck sowie des Lufttransportes bei Relativbewegungen von Schlauchstutzen untereinander ist zu nennen.
- Herausragender Verwendungsbereich ist der Ladeluftschlauch. Hinsichtlich der diesbezüglichen Technologie wird insbesondere auf die Offenlegungsschrift WO 2007/045322 A1 verwiesen.
- Der Schlauch kann zudem als Linearschlauch, Krümmerschlauch, Abzweigschlauch mit jeweils glatter und/oder faltiger Oberfläche eingesetzt werden.
- Abschließend ist noch die Verwendung des erfindungsgemäßen Schlauches im Rahmen einer Schlauchanordnung, umfassend den Schlauch und wenigstens ein Zusatzbauteil, zu erwähnen. Der Schlauch kommt dabei insbesondere in Kombination mit einem Hennstecker, einer VDA-Kupplung, einem Rohrstutzen mit Befestigungselementen, einem Scheuerschutz oder einem Schellenhalter zum Einsatz.

Eine weitere Aufgabe der Erfindung besteht darin, ein Verfahren bereitzustellen, mit dem auf einfache wie auch kostengünstige Weise ein gattungsgemäßer Schlauch hergestellt werden kann.

Im Hinblick auf die Innenschicht und der mit ihr verbundenen Haftschicht bzw. Zwischenschicht kommen folgende drei Verfahrensvarianten zum Einsatz:
- Variante A
   Die Innenschicht aus der aminisch vernetzbaren Kautschukmischung und die Haftschicht aus der peroxidisch vernetzbaren Kautschukmischung werden nacheinander durch Extrusion gebildet.
- Variante B
   Die Innenschicht und die Haftschicht mit den vernetzbaren Kautschukmischungen gemäß Variante A werden durch Coextrusion gebildet.
- Variante C
   Die Innenschicht und die Haftschicht mit den vernetzbaren Kautschukmischungen gemäß der Variante A werden jeweils durch Kalandrieren gebildet.

Nach den Teilverfahrensschritten gemäß der Varianten A, B und C erfolgt dann die Fertigstellung des Schlauches, und zwar unterfolgenden Gesichtspunkten:
- In Verbindung mit Anspruch 2 wird der Schlauchrohling aus Innenschicht und Haftschicht ohne Festigkeitsträgerschicht und Außenschicht vulkanisiert. Die Haftschicht hat hier zudem die Funktion der Außenschicht.
- In Verbindung mit Anspruch 5 wird der Schlauchrohling aus Innenschicht und Haftschicht mit der Festigkeitsträgerschicht und der Außenschicht konfektioniert, verbunden mit einer abschließenden Vulkanisation. Das Einbringen der ein- oder mehrlagigen Festigkeitsträgerschicht kann beispielsweise mittels Stricken, Wendeln oder Flechten erfolgen. Auch ein Wickelverfahren von mit Kautschukmischungen belegten Geweben ist möglich. Auch die Kombination von Extrusions- und Wickelverfahren kann zur Anwendung kommen. Diesbezüglich wird auf den allgemeinen Stand der Verfahrenstechnik bei der Herstellung von textilarmierten Schläuchen verwiesen.

Die Erfindung wird nun anhand eines Ausführungsbeispieles unter Bezugnahme auf eine schematische Zeichnung erläutert.

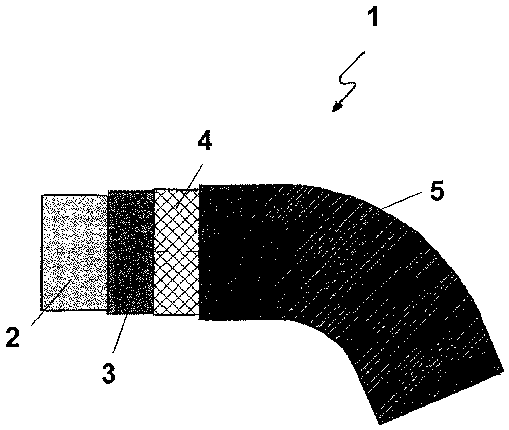

Die einzige Figur zeigt einen Schlauch 1 als Krümmerschlauch mit Anwendung in der Ladelufttechnologie. Der Schlauch weist dabei folgenden Schichtenaufbau mit folgender beispielhafter Werkstoffkonzeption auf:

| | |
|---|---|
| Innenschicht 2: | aminisch vernetzte und verschnittfreie AEM-Kautschukmischung |
| Haftschicht 3: | peroxidisch vernetzte und verschnittfreie EPDM-Kautschukmischung |
| Festigkeitsträgerschicht 4: | Textilfäden aus Aramid |
| Außenschicht 5 | peroxidisch vernetzte und verschnittfreie EPDM-Kautschukmischung |

Die Haftschicht 3 hat bei diesem Ausführungsbeispiel die Bedeutung einer Zwischenschicht und bildet mit der Innenschicht 2 einen Haftverbund.

Werden an den Schlauch keine hohen Druckanforderungen gestellt, so kann die Haftschicht 3 zugleich die Außenschicht bilden.

### Bezugszeichenliste

### (Teil der Beschreibung)

- 1: Schlauch
- 2: Innenschicht
- 3: Haftschicht (Zwischenschicht)
- 4: Festigkeitsträgerschicht
- 5: Außenschicht

## Patentansprüche

1. Schlauch (1) mit wenigstens folgendem Schichtenaufbau:
- einer Innenschicht (2) aus einer aminisch vernetzten Kautschukmischung mit medienbeständigen Eigenschaften und
- einer Haftschicht (3) aus einer peroxidisch vernetzten Kautschukmischung, die auf der Außenseite der Innenschicht (2) aufliegt, wobei die Innenschicht (2) und die Haftschicht (3) einen Haftverbund bilden;
**dadurch gekennzeichnet, dass**
- die Innenschicht (2) aus einer Kautschukmischung auf der Basis von verschnittfreiem AEM oder eines AEM-Verschnittes oder von verschnittfreiem ACM oder eines ACM-Verschnittes besteht und
- die Haftschicht (3) aus einer Kautschukmischung auf der Basis von EPM oder EPDM besteht, die jeweils unverschnitten sind.

2. Schlauch nach Anspruch 1, **dadurch gekennzeichnet, dass** die Haftschicht (3) zugleich die Außenschicht des Schlauches bildet.

3. Schlauch nach Anspruch 1, **dadurch gekennzeichnet, dass** der Schlauch (1) zusätzlich mit einer Außenschicht (5) aus einer peroxidisch vernetzten Kautschukmischung mit Beständigkeit gegen äußere Einflüsse versehen ist, wobei die Haftschicht (3) als Zwischenschicht dient.

4. Schlauch nach Anspruch 3, **dadurch gekennzeichnet, dass** die Außenschicht (5) aus einer Kautschukmischung auf der Basis von verschnittfreiem EPM oder eines EPM-Verschnittes oder von verschnittfreiem EPDM oder eines EPDM-Verschnittes besteht.

5. Schlauch nach Anspruch 3 oder 4, **dadurch gekennzeichnet, dass** zwischen der Haftschicht (3) und der Außenschicht (5) eine Festigkeitsträgerschicht (4), die ein- oder mehrlagig ausgebildet ist, angeordnet ist.

6. Schlauch nach einem der Ansprüche 1 bis 5, **dadurch gekennzeichnet, dass** die Innenschicht (2) aus einer Kautschukmischung besteht, die frei von einem peroxidischen Vernetzungsmittel ist, so dass ausschließlich das aminische Vernetzungsmittel wirkt.

7. Schlauch nach einem der Ansprüche 1 bis 6, **dadurch gekennzeichnet, dass** das aminische Vernetzungsmittel für die Kautschukmischung der Innenschicht (2) in einer Menge von 0,3 phr bis 2,1 phr, insbesondere von 0,8 phr bis 1,6 phr, insbesondere wiederum von 1,0 phr bis 1,4 phr, vorliegt.

8. Schlauch nach einem der Ansprüche 1 bis 7, **dadurch gekennzeichnet, dass** das aminische Vernetzungsmittel für die Kautschukmischung der Innenschicht (2) mit einem Beschleuniger ein Vernetzersystem bildet.

9. Schlauch nach Anspruch 8, **dadurch gekennzeichnet, dass** der Beschleuniger in einer Menge von 0,5 phr bis 2,4 phr, insbesondere von 0,8 phr bis 2,0 phr, insbesondere wiederum von 1,0 phr bis 1,8 phr, vorliegt.

10. Schlauch nach einem der Ansprüche 1 bis 9, **dadurch gekennzeichnet, dass** das peroxidische Vernetzungsmittel für die Kautschukmischung der Haftschicht (3) und/oder der Außenschicht (5) in einer Menge von 3,0 phr bis 10,0 phr, insbesondere von 4,5 phr bis 8,5 phr, insbesondere wiederum von 5,5 bis 7,5 phr, vorliegt.

11. Schlauch nach einem der Ansprüche 1 bis 10, **dadurch gekennzeichnet, dass** das peroxidische Vernetzungsmittel für die Kautschukmischung der Haftschicht (3) und/oder der Außenschicht (5) mit einem Aktivator ein Vernetzersystem bildet.

12. Schlauch nach Anspruch 11, **dadurch gekennzeichnet, dass** der Aktivator für die Kautschukmischung der Haftschicht (3) und/oder der Außenschicht (5) in einer Menge von 0,1 phr bis 20,0 phr, insbesondere von 1,0 phr bis 15,0 phr, insbesondere wiederum von 5,0 phr bis 15,0 phr, vorliegt.

13. Schlauch nach einem der Ansprüche 1 bis 12 zur Verwendung des Transportes einer Flüssigkeit oder eines Gases.

14. Schlauch nach Anspruch 13 zur Verwendung als Ladeluftschlauch.

15. Verfahren zur Herstellung eines Schlauches (1) nach einem der Ansprüche 1 bis 14, **dadurch gekennzeichnet, dass** die Innenschicht (2) aus der aminisch vernetzbaren Kautschukmischung und die Haftschicht (3) aus der peroxidisch vernetzbaren Kautschukmischung durch Coextrusion gebildet werden oder nacheinander durch Extrusion gebildet werden oder jeweils durch Kalandrieren gebildet werden, jeweils verbunden mit der anschließenden Fertigstellung des Schlauches (1).

16. Verfahren nach Anspruch 15, **dadurch gekennzeichnet, dass** der Schlauchrohling aus Innenschicht (2) und Haftschicht (3) ohne Festigkeitsträgerschicht (4) und ohne Außenschicht (5) vulkanisiert wird, wenn die Haftschicht (3) zugleich die Außenschicht des Schlauches bildet.

17. Verfahren nach einem der Ansprüche 15 bis 16, **dadurch gekennzeichnet, dass** der Schlauchrohling aus Innenschicht (2) und Haftschicht (3) mit der Festigkeitsträgerschicht (4) und der Außenschicht (5) konfektioniert wird, verbunden mit einer abschließenden Vulkanisation, wenn zwischen der Haftschicht (3) und der Außenschicht (5) eine Festigkeitsträgerschicht (4), die ein- oder mehrlagig ausgebildet ist, angeordnet ist..

## Claims

1. Hose (1) with at least the following layer structure:
- an internal layer (2) made of an aminically crosslinked rubber mixture with properties of resistance to the substances to be conveyed, and
- an adhesive layer (3) made of a peroxidically crosslinked rubber mixture which is in contact with the external side of the internal layer (2), where the internal layer (2) and the adhesive layer (3) form an adhesive bond;
**characterized in that**
- the internal layer (2) is composed of a rubber mixture based on unblended AEM or on an AEM blend, or on unblended ACM or on an ACM blend, and
- the adhesive layer (3) is composed of a rubber mixture based on EPM or EPDM, in each case unblended.

2. Hose according to Claim 1, **characterized in that** the adhesive layer (3) simultaneously forms the external layer of the hose.

3. Hose according to Claim 1, **characterized in that** the hose (1) has also been provided with an external layer (5) made of a peroxidically crosslinked rubber mixture with resistance toward exterior effects, where the adhesive layer (3) serves as intermediate layer.

4. Hose according to Claim 3, **characterized in that** the external layer (5) is composed of a rubber mixture based on unblended EPM or on an EPM blend, or on unblended EPDM or on an EPDM blend.

5. Hose according to Claim 3 or 4, **characterized in that** a single- or multiple-ply reinforcing layer (4) has been arranged between the adhesive layer (3) and the external layer (5).

6. Hose according to any of Claims 1 to 5, **characterized in that** the internal layer (2) is composed of a rubber mixture which is free from any peroxidic crosslinking agent, so that it is exclusively the aminic crosslinking agent that is active.

7. Hose according to any of Claims 1 to 6, **characterized in that** the amount of the aminic crosslinking agent present for the rubber mixture of the internal layer (2) is from 0.3 phr to 2.1 phr, in particular from 0.8 phr to 1.6 phr, more particularly from 1.0 phr to 1.4 phr.

8. Hose according to any of Claims 1 to 7, **characterized in that** the aminic crosslinking agent for the rubber mixture of the internal layer (2) forms, with an accelerator, a crosslinking agent system.

9. Hose according to Claim 8, **characterized in that** the amount present of the accelerator is from 0.5 phr to 2.4 phr, in particular from 0.8 phr to 2.0 phr, more particularly from 1.0 phr to 1.8 phr.

10. Hose according to any of Claims 1 to 9, **characterized in that** the amount present of the peroxidic crosslinking agent for the rubber mixture of the adhesive layer (3) and/or of the external layer (5) is from 3.0 phr to 10.0 phr, in particular from 4.5 phr to 8.5 phr, more particularly from 5.5 to 7.5 phr.

11. Hose according to any of Claims 1 to 10, **characterized in that** the peroxidic crosslinking agent for the rubber mixture of the adhesive layer (3) and/or of the external layer (5) forms, with an activator, a crosslinking agent system.

12. Hose according to Claim 11, **characterized in that** the amount present of the activator for the rubber mixture of the adhesive layer (3) and/or of the external layer (5) is from 0.1 phr to 20.0 phr, in particular from 1.0 phr to 15.0 phr, more particularly from 5.0 phr to 15.0 phr.

13. Hose according to any of Claims 1 to 12 for use in transporting a liquid or a gas.

14. Hose according to Claim 13 for use as charge-air hose.

15. Process for producing a hose (1) according to any of Claims 1 to 14, **characterized in that** the internal layer (2) made of the aminically crosslinkable rubber mixture and the adhesive layer (3) made of the peroxidically crosslinkable rubber mixture are formed via coextrusion or are formed in succession via extrusion or are respectively formed via calendering, respectively with attendant subsequent finishing of the hose (1).

16. Process according to Claim 15, **characterized in that** the unvulcanized hose made of internal layer (2) and adhesive layer (3) is vulcanized without reinforcing layer (4) and without external layer (5), if the adhesive layer (3) simultaneously forms the external layer of the hose.

17. Process according to any of Claims 15 to 16, **characterized in that** the unvulcanized hose made of internal layer (2) and adhesive layer (3) is further processed with the reinforcing layer (4) and with the external layer (5), with attendant final vulcanization if a single- or multiple-ply reinforcing layer (4) has been arranged between the adhesive layer (3) and the external layer (5).

## Revendications

1. Tuyau (1) présentant au moins la structure de couches suivante :
- une couche intérieure (2) en un mélange de caoutchouc à réticulation aminée ayant des propriétés de résistance aux fluides et
- une couche d'adhérence (3) en un mélange de caoutchouc à réticulation peroxydique, qui repose sur le côté extérieur de la couche intérieure (2), la couche intérieure (2) et la couche d'adhérence (3) formant un composite d'adhérence ;
**caractérisé en ce que**
- la couche intérieure (2) est constituée d'un mélange de caoutchouc à base d'AEM non mélangé ou d'un mélange d'AEM ou d'ACM non mélangé ou d'un mélange d'ACM, et
- la couche d'adhérence (3) est constituée d'un mélange de caoutchouc à base d'EPM ou d'EPDM, qui sont chacun non mélangés.

2. Tuyau selon la revendication 1, **caractérisé en ce que** la couche d'adhérence (3) forme simultanément la couche extérieure du tuyau.

3. Tuyau selon la revendication 1, **caractérisé en ce que** le tuyau (1) est en outre muni d'une couche extérieure (5) en un mélange de caoutchouc à réticulation peroxydique ayant une résistance aux impacts extérieurs, la couche d'adhérence (3) servant de couche intermédiaire.

4. Tuyau selon la revendication 3, **caractérisé en ce que** la couche extérieure (5) est constituée d'un mélange de caoutchouc à base d'EPM non mélangé ou d'un mélange d'EPM ou d'EPDM non mélangé ou d'un mélange d'EPDM.

5. Tuyau selon la revendication 3 ou 4, **caractérisé en ce qu'**une couche de renfort (4), qui est configurée mono-ou multicouche, est agencée entre la couche d'adhérence (3) et la couche extérieure (5).

6. Tuyau selon l'une quelconque des revendications 1 à 5, **caractérisé en ce que** la couche intérieure (2) est constituée d'un mélange de caoutchouc qui est exempt d'un agent de réticulation peroxydique, de sorte que l'agent de réticulation aminé agisse exclusivement.

7. Tuyau selon l'une quelconque des revendications 1 à 6, **caractérisé en ce que** l'agent de réticulation aminé pour le mélange de caoutchouc de la couche intérieure (2) est présent en une quantité de 0,3 pce à 2,1 pce, notamment de 0,8 pce à 1,6 pce, plus particulièrement de 1,0 pce à 1,4 pce.

8. Tuyau selon l'une quelconque des revendications 1 à 7, **caractérisé en ce que** l'agent de réticulation aminé pour le mélange de caoutchouc de la couche intérieure (2) forme un système de réticulation avec un accélérateur.

9. Tuyau selon la revendication 8, **caractérisé en ce que** l'accélérateur est présent en une quantité de 0,5 pce à 2,4 pce, notamment de 0,8 pce à 2,0 pce, plus particulièrement de 1,0 pce à 1,8 pce.

10. Tuyau selon l'une quelconque des revendications 1 à 9, **caractérisé en ce que** l'agent de réticulation peroxydique pour le mélange de caoutchouc de la couche d'adhérence (3) et/ou de la couche extérieure (5) est présent en une quantité de 3,0 pce à 10,0 pce, notamment de 4,5 à 8,5 pce, plus particulièrement de 5,5 à 7,5 pce.

11. Tuyau selon l'une quelconque des revendications 1 à 10, **caractérisé en ce que** l'agent de réticulation peroxydique pour le mélange de caoutchouc de la couche d'adhérence (3) et/ou de la couche extérieure (5) forme un système de réticulation avec un activateur.

12. Tuyau selon la revendication 11, **caractérisé en ce que** l'activateur pour le mélange de caoutchouc de la couche d'adhérence (3) et/ou de la couche extérieure (5) est présent en une quantité de 0,1 pce à 20,0 pce, notamment de 1,0 à 15,0 pce, plus particulièrement de 5,0 pce à 15,0 pce.

13. Tuyau selon l'une quelconque des revendications 1 à 12, destiné à une utilisation pour le transport d'un liquide ou d'un gaz.

14. Tuyau selon la revendication 13, destiné à une utilisation en tant que tuyau d'air d'alimentation.

15. Procédé de fabrication d'un tuyau (1) selon l'une quelconque des revendications 1 à 14, **caractérisé en ce que** la couche intérieure (2) en le mélange de caoutchouc à réticulation aminée et la couche d'adhérence (3) en le mélange de caoutchouc à réticulation peroxydique sont formées par co-extrusion ou formées successivement par extrusion ou formées respectivement par calandrage, avec à chaque fois la finition ultérieure du tuyau (1).

16. Procédé selon la revendication 15, **caractérisé en ce que** l'ébauche de tuyau constituée de la couche intérieure (2) et de la couche d'adhérence (3) sans couche de renfort (4) et sans couche extérieure (5) est vulcanisée lorsque la couche d'adhérence (3) forme simultanément la couche extérieure du tuyau.

17. Procédé selon l'une quelconque des revendications 15 à 16, **caractérisé en ce que** l'ébauche de tuyau constituée de la couche intérieure (2) et de la couche d'adhérence (3) avec la couche de renfort (4) et la couche extérieure (5) est confectionnée, avec une vulcanisation finale, lorsqu'une couche de renfort (4), qui est configurée mono- ou multicouche, est agencée entre la couche d'adhérence (3) et la couche extérieure (5).
